# EUROPÄISCHE PATENTSCHRIFT

(11) **EP 3 744 797 B1**
(45) Veröffentlichungstag und Bekanntmachung des Hinweises auf die Patenterteilung: **01.01.2025**
(21) Anmeldenummer: 19177613.7
(22) Anmeldetag: 31.05.2019
(51) Int. Cl.: C09D 17/00, C09D 5/08

(54) **LÖSEMITTELHALTIGE PIGMENTPASTE, KIT-OF-PARTS BESCHICHTUNGSSYSTEM ENTHALTEND DIE LÖSEMITTELHALTIGE PIGMENTPASTE, VERWENDUNG DER LÖSEMITTELHALTIGEN PIGMENTPASTE, ABGETÖNTES ANSTRICHSYSTEM AUS DEM KIT-OF-PARTS BESCHICHTUNGSSYSTEM UND ANSTRICH ERHÄLTLICH AUS DEM ABGETÖNTEN ANSTRICHSYSTEM**
SOLVENT-CONTAINING PIGMENT PASTE, KIT OF PARTS COATING SYSTEM COMPRISING THE SOLVENT-CONTAINING PIGMENT PASTE, USE OF THE SOLVENT-CONTAINING PIGMENT PASTE, TINTED APPLICATION SYSTEM FROM THE KIT OF PARTS COATING SYSTEM AND APPLICATION OBTAINED FROM THE TINTED APPLICATION SYSTEM
PÂTE PIGMENTAIRE CONTENANT DU SOLVANT, SYSTÈME DE REVÊTEMENT À BASE D'ENSEMBLE DES PIÈCES CONTENANT DE LA PÂTE PIGMENTAIRE CONTENANT DU SOLVANT, UTILISATION DE LA PÂTE PIGMENTAIRE CONTENANT DU SOLVANT, SYSTÈME TEINTÉ DE PEINTURE DU SYSTÈME DE REVÊTEMENT À BASE D'ENSEMBLE DES PIÈCES ET PEINTURE OBTENUE À PARTIR DU SYSTÈME TEINTÉ DE PEINTURE

(43) Veröffentlichungstag der Anmeldung: 02.12.2020
(73) Patentinhaber: DAW SE, 64372 Ober-Ramstadt (DE)
(72) Erfinder: WIESE-EDELMANN, Barbara, 04668 Grimma OT Döben (DE)
(74) Vertreter: Metten, Karl-Heinz

(56) Entgegenhaltungen:
- WO-A1-01/21298
- WO-A1-2009/103381
- WO-A2-2011/130299
- GB-A- 2 400 371
- JP-A- 2006 299 090
- JP-A- 2010 230 979
- US-A1- 2005 032 932

## Beschreibung

Die vorliegende Erfindung betrifft eine lösemittelhaltige Pigmentpaste zum Abtönen von Beschichtungsmassen, ein Kit-of-parts Beschichtungssystem enthaltend die erfindungsgemäßen lösemittelhaltigen Pigmentpasten sowie die Verwendung der lösemittelhaltigen Pigmentpaste. Ferner betrifft die Erfindung ein abgetöntes Anstrichsystem erhältlich aus dem erfindungsgemäßen Kit-of-parts Beschichtungssystem und einen Anstrich erhältlich durch Auftragen des erfindungsgemäßen abgetönten Anstrichsystems.

Farbtonpasten werden zum Abtönen vielfältiger Beschichtungsmassen eingesetzt. Mit Hilfe von Farbtonpasten kann eine gewünschte Farbe auch in größeren Mengen für den Farbauftrag verfügbar gemacht werden, und zwar sowohl am *Point of Sale* wie auch am Einsatzort selber. Farbtonpasten gestatten es, eine Vielzahl an Beschichtungsmassen, beispielsweise Lacke oder Lasuren, nicht mehr in größeren Mengen für jede gewünschte oder verfügbare Farbe vorrätig halten zu müssen. Es reicht vielmehr eine einzige Beschichtungsmasse aus, beispielsweise in transparenter oder weißer Ausgestaltung, um über die Farbtonpaste die vom Kunden gewünschte Farbe in größeren Mengen bereitstellen zu können. Im Ergebnis sind dann nicht mehr die final eingefärbten Beschichtungsmassen als solche in größeren Mengen vorrätig zu halten, diese können stattdessen relativ frisch aus einer Basisbeschichtungsmasse hergestellt und für die baldige Verwendung, d.h. Abtönung zur Verfügung gestellt werden.

Die US 2005/032932 stellt ab auf eine HAPs-freie Tintenstrahltintenzusammensetzung, umfassend ein Pigment, ein Bindemittel aus Poly(vinylchlorid-covinylacetat) und eine HAPs-freie Lösungsmittelkomponente umfassend 1-Methoxy-2-propanolacetat, ein Dispersionslösungsmittel, ausgewählt aus Cyclohexanon, N-Propylacetat, N-Butylacetat, Diisobutylketon, Isobutylacetat, Amylacetat und Kombinationen davon, und ein Verdünnungsmittel, ausgewählt aus Dipropylenglykolmethylether, Dipropylenglykolmethyletheracetat, Tripropylenglykolmethylether, Ethylenglykoldiacetat, Propylenglykol-n-butylether, Propylenglykol-n-propylether und Kombinationen davon. Eine solche Tinte solle gute Druckeigenschaften aufweisen.

Die JP 2006 299090 A offenbart eine Pigmentdispersionszusammensetzung, umfassend ein Pigment, ein Dispergiermittel und ein Lösungsmittel mit zwei Acetatstrukturen. Solche Zusammensetzungen sollen eine gute Stabilität aufweisen.

Die JP 2010 230979 A stellt ab auf ein Verfahren zur Herstellung eines Farbfiltersubstrats, bei dem eine schwarze Matrix und mindestens eine Vielzahl von gefärbten Schichten auf einem transparenten Substrat gebildet werden. Hierbei wird ein Schritt des Erhitzens (Trocknens) unter einer geeigneten Temperaturbedingung, die niedriger als der Gelpunkt der wärmehärtenden Färbezusammensetzung ist, durchgeführt und ein Schritt des Erhitzens (Aushärtens) unter einer geeigneten Temperaturbedingung, die höher als der Gelpunkt ist, durchgeführt. Durch die Herstellung des Farbfiltersubstrats auf die oben beschriebene Weise soll es möglich sein, ein Farbfiltersubstrat mit Pixel-Ebenheit und hoher Qualität herzustellen.

Die WO 2009/103381 A1 offenbart Additionsverbindungen und deren Salze, insbesondere in Form von Netz- und Dispergiermitteln. Mit den in der WO 2009/103381 A1 offenbarten Verbindungen soll eine Verbesserung der Beständigkeit bei guter Dispergierung und Stabilisierung der Pigmente oder Füllstoffteilchen in Bindemitteln, Pigmentpasten oder Kunststoffformulierungen erreicht werden.

Die GB 2 400 371 A stellt ab auf ein Verfahren zur Herstellung einer Metallflockenpigmentzusammensetzung mit geringer Flüchtigkeit, umfassend das Mahlen von Metallpulver in einer nichtwässrigen, nicht kohlenwasserstoffhaltigen Mahlflüssigkeit mit geringer Flüchtigkeit. Solche Zusammensetzungen sollen sowohl in lösemittelhaltigen als auch in Beschichtungen auf Lösemittel- und Wasserbasis einsetzbar sein.

Die WO 01/21298 A1 wiederum offenbart ein Dispergiermittel, das eine Polyamin- oder Polyimin-Hauptkette mit Seitenketten aus zwei oder mehr verschiedenen Typen von Polyesterketten umfasst, wobei mindestens ein Typ von Polyesterkette von einer oder mehreren Hydroxycarbonsäuren ableitbar ist, die alle eine C16-Alkylengruppe oder ein Lacton davon enthalten, und mindestens ein anderer Typ von Polyesterkette ableitbar von einer oder mehreren Hydroxycarbonsäuren ist, wobei mindestens eine der Hydroxycarbonsäuren eine C8-30-Alkylen- oder C8-30-Alkenylenkette oder ein Lacton davon enthält, einschließlich Salze solcher Dispergiermittel. Diese Dispergiermittel sollen sowohl in polaren als auch in unpolaren organischen Flüssigkeiten einsetzbar sein, ohne dass sich die Dispersionseigenschaften in dem einem Typ der organischen Flüssigkeit wesentlich verschlechtern.

Die WO 2011/130299 A2 stellt ab auf eine lösemittelhaltige Pigmentdispersion mit einem Gehalt an flüchtigen organischen Chemikalien (VOC) von weniger als 250 g/ l zum Abtönen lösemittelhaltiger Oberflächenbeschichtungen, wobei die Pigmentdispersion Folgendes umfasst: a) eine aus Pflanzenöl gewonnene Lösungsmittelkomponente, bei der es sich um eine Mischung aus Methylestern eines oder mehrerer Pflanzenöle handelt, b) ein Harz mit hohem Feststoffgehalt oder eine Harzmischung mit mindestens 60 % Feststoffgehalt, c) ein oder mehrere Tenside, die keine Alkylphenolethoxylat-Einheiten oder freien aromatischen Verbindungen enthalten, und d) mindestens ein organisches Pigment oder mindestens ein anorganisches Pigment oder Mischungen davon. Solche Pigmentdispersionen sollen einen relativ geringen Gehalt an flüchtigen organischen Chemikalien (VOC) enthalten und zur Verwendung bei der Herstellung von getönten Beschichtungen auf Lösungsmittelbasis einsetzbar sein.

Die EP 2 243 808 A1 betrifft eine Pigmentpaste zum Tönen eines Anstrichmittels enthaltend ein organisches Lösungsmittel, ein Pigment, einen Alkydharz mit einer Viskosität, gemessen bei 23°C und bei einer Schergeschwindigkeit von 100 s⁻¹, von mindestens 5 Pas, und ein Netzmittel, wobei die Pigmentpaste eine Viskosität, gemessen bei 23°C und einer Schergeschwindigkeit von 100 s⁻¹, von 0,1 bis 8 Pas sowie einen Feststoffgehalt von mindestens 60 Gew.-% aufweist. Diese Pigmentpasten sollen auch bei hohen Feststoffgehalten sowie bei Verwendung von Alkydharzen mit einer Viskosität von mehr als 5 Pas, gemessen bei 23°C und einer Schergeschwindigkeit von 100 s⁻¹, eine für die praktische Anwendung zweckmäßige Viskosität aufweisen. Allerdings thematisiert die EP 2 243 808 A1 nicht die Problematik hoher VOC-Gehalte, die regelmäßig mit lösemittelhaltigen bzw. lösemittelbasierten Pigmentpasten einhergehen. Es findet sich dort allenfalls der Hinweis, dass mit der Erhöhung des Anteils an Pigmenten der Lösemittelanteil sinkt.

Zwar können lösemittelhaltige Pigmentpasten z.B. am *Point of Sale* nur in kleinen Mengen in den Abtönmaschinen vorrätig gehalten werden. Allerdings werden gleichwohl häufig nicht geringe Mengen an Lösemitteln freigesetzt. Hierbei handelt es sich um organische Verbindungen, die letztendlich für einen hohen VOC-Wert bzw. für eine dauerhafte Exposition mit den Dämpfen organischer Lösemittel verantwortlich sind.

Es wäre daher wünschenswert, auf lösemittelhaltige Farbtonpasten zurückgreifen zu können, die nicht mehr mit den Nachteilen des Stands der Technik behaftet sind.

Demgemäß wurde eine lösemittelhaltige Pigmentpaste zum Abtönen von Beschichtungsmassen gefunden, enthaltend oder bestehend aus
a1) Methoxypropylacetat, n-Propyllactat und/oder 2-Ethylhexylactat, insbesondere Methoxypropylacetat, als Lösemittel,
a2) Propylenglycoldiacetat, Ethylenglycoldiacetat und/oder Butylenglycoldiacetat, insbesondere Propylenglycoldiacetat, als Lösemittel,
b) mindestens einem Pigment und
c) mindestens einem Aldehyd-basierten Harz, insbesondere Harnstoff-Aldehydharz, und/oder mindestens einem Keton-basierten Harz, insbesondere mindestens einem Aldehyd-basierten Harz, und
d) mindestens einem Netz- und/oder Dispergiermittel, insbesondere umfassend einen verzweigtkettigen Polyester d1) und/oder ein Polyesterblockcopolymer d2), vorzugsweise mit einer Molmasse Mw im Bereich von 60.000 bis 100.000 g/mol, und/oder ein polymeres Alkylammoniumsalz d3), und/oder einen Polyphosphorsäureester d4), bevorzugt mit einer Molmasse Mw im Bereich von 100 bis 5.000 g/mol,
wobei diese Pigmentpaste über eine Viskosität im Bereich von 400 bis 4.000 mPas, bestimmt bei einer Schergeschwindigkeit von 120 s⁻¹ und einer Temperatur von 23 °C, verfügt.

Als besonders geeignet haben sich solche lösemittelhaltigen Pigmentpasten erwiesen, enthaltend
a1) Methoxypropylacetat,
a2) Propylenglycoldiacetat,
b) mindestens ein Pigment,
c) mindestens einen Harnstoff-Aldehydharz und
d) mindestens einem Netz- und/oder Dispergiermittel, insbesondere umfassend einen verzweigtkettigen Polyester d1) und/oder, insbesondere und, ein Polyesterblockcopolymer d2), vorzugsweise mit einer Molmasse Mw im Bereich von 60.000 bis 100.000 g/mol, und/oder ein polymeres Alkylammoniumsalz d3), und/oder einen Polyphosphorsäureester d4), bevorzugt mit einer Molmasse Mw im Bereich von 100 bis 5.000 g/mol,
wobei diese Pigmentpaste über eine Viskosität im Bereich von 400 bis 4.000 mPas, bestimmt bei einer Schergeschwindigkeit von 120 s⁻¹ und einer Temperatur von 23 °C, verfügt.

Besonders bevorzugt kommen als Komponente d) der verzweigtkettige Polyester d1) oder das Polyesterblockcopolymer d2), vorzugsweise mit einer Molmasse Mw im Bereich von 60.000 bis 100.000 g/mol, zum Einsatz. Die Komponenten d1) bzw. d2) können dabei auch mit dem Komponenten d3) und/oder d4) eingesetzt werden. Hierbei wird die Komponente d1), gegebenenfalls gemeinsam mit den Komponenten d3) und/oder d4), insbesondere dann eingesetzt, wenn die erfindungsgemäße Pigmentpaste anorganische Pigmente enthält, vorzugsweise ausschließlich anorganische Pigmente enthält. Auf die Komponente d2), gegebenenfalls gemeinsam mit den Komponenten d3) und/oder d4) wird bevorzugt bei solchen erfindungsgemäßen Pigmentpasten zurückgegriffen, die organische Pigmente enthalten, bevorzugt ausschließlich organische Pigmente enthalten.

Die Molmasse Mw bzw. das gewichtsmittlere Molekulargewicht Mw der Polyesterblockcopolymer-basierten Netz- und/oder Dispergiermittel d2) kann mittels Gelpermeationschromatographie, z.B. unter Verwendung einer Hochdruckflüssigkeitschromatographie-Pumpe und eines Brechungsindexdetektors bestimmt werden. Zwecks Kalibrierung kann auf Polystyrol-Standards zurückgegriffen werden

Die der Erfindung zugrunde liegende Aufgabe wird auch besonders zufriedenstellend durch solche lösemittelhaltigen Pigmentpasten gelöst, die Essigsäure-n-butylester und/oder 3-Methoxy-n-butylacetat, insbesondere 3-Methoxy-n-butylacetat, als Lösemitte a3) enthalten. Dies gilt insbesondere auch für solche erfindungsgemäßen Pigmentpasten, in denen neben Methoxypropylacetat, Propylenglycoldiacetat und 3-Methoxy-n-butylacetat im Wesentlichen keine weiteren organischen Lösemittel vorliegen.

Zweckmäßige erfindungsgemäße lösemittelhaltige Pigmentpasten können ferner
e) mindestens einen Entschäumer und/oder
f) mindestens ein Rheologieadditiv, insbesondere Verdicker, und/oder
g) mindestens einen Füllstoff und/oder
h) mindestens ein Additiv, das nicht Komponente d), e), f) ist, enthalten.

Hierbei können besonders geeignete Pigmente ausgewählt sein aus der Gruppe bestehend aus Dioxazinviolett P.V.23, Phthalocyaningrün P.G.7, Chromoxidgrün P.G.17, DPP-Rot P.R.254, DPP Orange P.O. 73, Azogelb P.Y. 74, Chinophthalone138, Titandioxid Rutil PW 6, Phthalocyaninblau P.B. 15:3 und P.B.15:6, Aluminium n.l., Eisenoxidrot, Eisenoxidgelb, Pigmentruß P.bl.7, Chinacridonrot P.R.122 und Mischungen hiervon.

Als geeignete Pigmente kommen grundsätzlich anorganische Weißpigmente wie Titandioxid, Zinkweiß, Zinksulfid, Lithopone und/oder Ettringit, anorganische Schwarzpigmente wie Eisenoxidschwarz, Eisen-Mangan-Schwarz, Spinellschwarz und/oder Ruß und/oder anorganische Buntpigmente wie Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat in Betracht. Unter den genannten Pigmenten wird häufig zurückgegriffen auf z.B. Titandioxid, Zinksulfid, Zinkoxid, Baryt, Ruß, Eisenoxid, Chromoxid, Kobaltblau, Spinellpigment, Nickeltitanat, Chromtitanat und deren beliebige Mischungen.

Geeignete Pigmentmischungen können Mischungen aus unterschiedlichen anorganischen Pigmenten umfassen.

Für einige Anwendungen hat es sich als zweckmäßig erwiesen, die erfindungsgemäße Pigmentpasten mit mindestens einem Rheologieadditiv auszustatten, insbesondere ausgewählt aus der Gruppe bestehend aus Schichtsilikaten, z.B. Bentoniten, modifizierten Schichtsilikaten, insbesondere organisch modifizierten Schichtsilikaten, pyrogener Kieselsäure und deren Mischungen. Modifizierte sowie insbesondere organisch modifizierte Schichtsilikate können beispielsweise durch Vermischen von quartären Ammoniumsalzen mit einem Ton, beispielsweise Smektiten, Montmorilloniten, Bentoniten und/oder Sepioliten erhalten werden. Hierbei entstehen regelmäßig sogenannte exfolierte Schichtsilikatsysteme. Die quartären Ammoniumsalze verfügen im Allgemeinen über mindestens einen, vorzugsweise mindestens zwei oder zwei langkettige gesättigte oder Doppelbindungen enthaltende Kohlenwasserstoffreste, beispielsweise eine lineare oder verzweigte, insbesondere lineare, Alkyl- oder Alkylenkette. Exemplarisch seien langkettige Kohlenwasserstoffreste auf Basis natürlicher Fettsäuren wie Ölsäure, Linolsäure, Palmitinsäure, Stearinsäure und/oder Myristinsäure genannt. Beispielsweise seien als geeignete modifizierte Schichtsilikate Quaternium-90 Sepiolite und Quaternium-90 Montmorillonite genannt.

Geeignete Füllstoffe umfassen z.B. calcitische Füllstoffe, insbesondere Calciumcarbonat, und/oder silikatische Füllstoffe und/oder Bariumsulfat, wobei calcitische Füllstoffe, insbesondere Calciumcarbonat, und Bariumsulfat besonders bevorzugt sind.

Die erfindungsgemäßen lösemittelhaltigen Pigmentpasten zeichnen sich insbesondere auch dadurch aus, dass deren Flammpunkt größer oder gleich 45 °C, bevorzugt größer oder gleich 50 °C und besonders bevorzugt größer oder gleich 52 °C, bestimmt gemäß DIN EN ISO 1523:2002-08, sind. Dies wird vorzugsweise mit solchen lösemittelhaltigen Pigmentpasten erreicht, die Methoxypropylacetat als Lösemittel a1), insbesondere als einziges Lösemittel a1), Propylenglykoldiacetat als Lösemittel a2), insbesondere als einziges Lösemittel a2), und 3-Methoxy-n-butylacetat als Lösemittel a3), insbesondere als einziges Lösemittel a3), sowie insbesondere den mindestens einen Aldehyd-basierten Harz, insbesondere Harnstoff-Aldehydharz, c), enthalten. Besonders bevorzugte Harnstoff-Aldehydharze bzw. harnstoffmodifizierte Aldehydharze basieren auf Isobutyraldehyd, Acetaldehyd, Propionaldehyd, n-Butyraldehyd und/oder Formaldehyd, insbesondere auf Isobutyraldehyd und Formaldehyd. Bei Verwendung der erfindungsgemäßen Pigmentpasten in Abtönmaschinen ist es demgemäß möglich, auf konstruktive Maßnahmen zum Explosionsschutz, wie sie mit herkömmlichen Abtönmaschinen regelmäßig erforderlich sind, zu verzichten. Denn grundsätzlich sind mit den erfindungsgemäßen Pigmentpasten ohne weiteres auch solche zugänglich mit einem Flammpunkt größer oder gleich 60 °C.

Geeignete Keton-basierte Harze umfassen z.B. Polykondensate aus Methylethylketon, Cyclohexanon und/oder Acetophenon mit Formaldehyd, insbesondere aus Methylethylketon, Cyclohexanon und Acetophenon mit Formaldehyd.

Die erfindungsgemäßen lösemittelhaltigen Pigmentpasten enthalten in besonders bevorzugten Ausführungsformen
1,0 bis 30,0 Gew.-%, bevorzugt 2,0 bis 26 Gew.-% und besonders bevorzugt 5 bis 12 Gew.-% an Komponente a1),
0,1 bis 15,0 Gew.-%, bevorzugt 2,0 bis 12 Gew.-% und besonders bevorzugt 3 bis 10 Gew.-% an Komponente a2),
0 bis 15,0 Gew.-%, bevorzugt 1,0 bis 10,0 Gew.-% und besonders bevorzugt 2,0 bis 8,0 Gew.-% an Komponente a3),
0,1 bis 65,0 Gew.-%, bevorzugt 1,0 bis 20 Gew.-% und besonders bevorzugt 2,0 bis 15,0 Gew.-% an Komponente b),
5,0 bis 45,0 Gew.-%, bevorzugt 8,0 bis 40,0 Gew.-% und besonders bevorzugt 10,0 bis 25,0 Gew.-% an Komponente c),
0,2 bis 14,0 Gew.-%, bevorzugt 0,5 bis 10,0 Gew.-% und besonders bevorzugt 0,8 bis 8,0 Gew.-% an Komponente d),
jeweils bezogen auf das Gesamtgewicht der Pigmentpaste, wobei die die Pigmentpaste bildenden Komponenten sich stets zu 100,00 Gew.-% aufaddieren.
Als besonders zweckmäßig haben sich auch solche lösemittelhaltigen Pigmentpasten erwiesen, enthaltend
0 bis 5,0 Gew.-%, bevorzugt 0,5 bis 4,0 Gew.-% und besonders bevorzugt 0,6 bis 3,0 Gew.-% an Komponente d1) und/oder
0 bis 4,0 Gew.-%, bevorzugt 0,05 bis 3,0 Gew.-% und besonders bevorzugt 0,1 bis 2,5 Gew.-% an Komponente d2) und/oder
0 bis 3,0 Gew.-%, bevorzugt 0,05 bis 2,0 Gew.-% und besonders bevorzugt 0,1 bis 1,5 Gew.-% an Komponente d3) und/oder
0 bis 3 Gew.-%, bevorzugt 0,05 bis 2Gew.-% und besonders bevorzugt 0,1 bis 1,5 Gew.-% an Komponente d4),
wobei mindestens d1) oder d2) oder d3) oder d4) in einer Menge größer 0 Gew.-% in der Pigmentpaste vorliegt.

Die der Erfindung zugrunde liegende Aufgabe wird besonders zufriedenstellend auch mit derartigen erfindungsgemäßen lösemittelhaltigen Pigmentpasten gelöst, die im Wesentlichen frei von aromatischen Lösemitteln sind. Im Sinne der vorliegenden Erfindung soll eine lösemittelhaltige Pigmentpaste dann als im Wesentlichen aromatenfrei angesehen werden, wenn im Einklang mit der VdL-Richtlinie Beschichtungsstoffe - VdL-RL 01 (5. Revision; revidierte Ausgabe Januar 2017) des Verbands der deutschen Lack- und Druckfarbenindustrie e.V., Frankfurt am Main, Deutschland, der Aromatengehalt in der Pigmentpaste kleiner als 1,0 Gew.-% und besonders bevorzugt kleiner als 0,1 Gew.-%, ist, bestimmt nach DIN 55683:2009-08.

Der Feststoffanteil der erfindungsgemäßen Lösemittelhaltige Pigmentpasten liegt in zweckmäßigen Ausgestaltungen im Bereich von 60 bis 90 Gewichtsprozent und bevorzugt im Bereich von 65 bis 85 Gewichtsprozent, bezogen auf das Gesamtgewicht der Pigmentpaste.

Die erfindungsgemäßen Pigmentpasten liegen als pastöse Massen vor. Unter einer pastösen Masse wird im Sinne der Erfindung ein Feststoff-Flüssigkeitsgemisch, so dass die pastöse Masse nach Applikation an einer vertikalen Wandfläche gezielt verstrichen werden kann. Die erfindungsgemäßen lösemittelhaltigen Pigmentpasten sind insbesondere auch dann als pastöse Massen im Sinne der vorliegenden Erfindung anzusehen, wenn sie über eine Viskosität im Bereich von 400 bis 3.500 mPas bestimmt bei einer Schergeschwindigkeit von 120 s⁻¹ und einer Temperatur von 23 °C, verfügen. Für die Bestimmung der Viskosität werden die erfindungsgemäßen Pigmentpasten bei einer Temperatur von 23 °C für 240 Sekunden bei einer Schergeschwindigkeit von 120 s⁻¹ gerührt und es wird der bei 240 Sekunden ermittelte Viskositätswert genommen.

Die erfindungsgemäßen lösemittelhaltigen Pigmentpasten zeichnen sich in einer bevorzugten Ausgestaltung dadurch aus, dass sie über einen VOC-Anteil kleiner 500 g/l, vorzugsweise kleiner 300 g/l, bestimmt nach DIN EN ISO 11890-1 (September 2007), verfügen.

Die der Erfindung zugrunde liegende Aufgabe wird des Weiteren gelöst durch ein Kit-of-parts Beschichtungssystem, enthaltend oder gebildet aus
A) mindestens einer erfindungsgemäßen lösemittelhaltigen Pigmentpaste und
B) mindestens einer Beschichtungsmasse.

Bei der hierbei zum Einsatz kommenden Beschichtungsmasse kann es sich zum Beispiel um eine lösemittelhaltige Lasur, einen Lösemittellack, eine lösemittelhaltige Farbe, eine lösemittelhaltige Bodenbeschichtung oder die jeweilige Grundrezeptur hierfür handeln. Ganz besonders bevorzugt können mit den erfindungsgemäßen Pigmentpasten auch solche Beschichtungsmassen abgetönt werden, die ausgewählt sind aus der Gruppe bestehend aus 2K-Epoxidharzsystemen, 2K-PU-Harzsystemen, 1K-Epoxidharzsystemen, 1K-PU-Harzsystemen und Alkydharzsystemen. Unter einem Alkydharz bzw. Alkydharzsystem soll im Sinne der Erfindung ein Polyester verstanden werden, der mit einem trocknenden Öl und/oder einer Fettsäure verestert ist (s.a. U. Poth, Polyester und Alkydharze, Vincentz Network 2005).

Es hat sich überraschend gezeigt, dass die erfindungsgemäßen Pigmentpasten als solche verwendet werden können, um Beschichtungsmassen basierend auf 2K-Epoxidharzsystemen, 2K-PU-Harzsystemen, 1K-Epoxidharzsystemen, 1K-PU-Harzsystemen und Alkydharzsystemen abzutönen, d.h. die erfindungsgemäßen Pigmentpasten können universell bei sämtlichen der vorangehend genannten Beschichtungsmassen eingesetzt werden. Eine Feinanpassung der Zusammensetzung der erfindungsgemäßen Pigmentpasten ist bei einem Wechsel des Typs der Beschichtungsmasse regelmäßig nicht erforderlich.

Als besonders vorteilhaft hat sich der Einsatz der erfindungsgemäßen Pigmentpasten für solche Beschichtungsmassen erwiesen, die für die Herstellung korrosionsschützender Anstriche vorgesehen sind, d.h. die mindestens ein Korrosionsschutzmittel enthalten. Als besonders geeignete Korrosionsschutzmittel, die in solchen Beschichtungsmassen eingesetzt werden können, kann zurückgegriffen werden auf Calciumorthophosphat, Calcium-Magnesium-Orthophosphat, Calcium-Aluminium-Polyphosphatsilicathydrat, Zink-Aluminium-Orthophosphat, basisches Zink-Orthophosphathydrat, Zink-Aluminium-Polyphosphathydrat, Zink-Aluminium-Orthophosphathydrat, Zink-Aluminium-Molybdän-Orthophosphathydrat, basisches Zinkorthophosphathydrat, Zink-Aluminium-Polyphosphathydrat, Strontium-Aluminium-Polyphosphathydrat, basisches Zink-Molybdän-Orthophosphathydrat, Zink-Calcium-Strontium-Aluminium-Orthophosphatsilikathydrat oder Zinkoxid, wobei auch beliebige Mischungen der vorangehend genannten Korrosionsschutzmittel verwendet werden können.

Bevorzugt kommen bei den erfindungsgemäßen Kit-of-parts Abtönsystemen Beschichtungsmassen zum Einsatz, die im Wesentlichen aromatenfrei, d.h. frei von aromatischen Lösemitteln sind. Im Sinne der vorliegenden Erfindung soll eine lösemittelhaltige Beschichtungsmasse dann als im Wesentlichen aromatenfrei angesehen werden, wenn im Einklang mit der VdL-Richtlinie Beschichtungsstoffe - VdL-RL 01 (5. Revision; revidierte Ausgabe Januar 2017) des Verbands der deutschen Lack- und Druckfarbenindustrie e.V., Frankfurt am Main, Deutschland, der Aromatengehalt in der Beschichtungsmasse kleiner als 1,0 Gew.-% und besonders bevorzugt kleiner als 0,1 Gew.-%, ist, bestimmt nach DIN 55683:2009-08.

Die erfindungsgemäßen lösemittelhaltigen Pigmentpasten wie auch die erfindungsgemäßen Kit-of-Parts Abtönsysteme bekommen bevorzugt in Abtönmaschinen, insbesondere *Point-of-Sale-Abtönmaschinen,* zum Einsatz. Durch Vermengen der Komponenten des erfindungsgemäßen Kit-of-parts Beschichtungssystems erhält man ein abgetötet Anstrichsystem, das für die Applikation auf Substrate Oberflächen zur Verfügung steht.

Mit den erfindungsgemäßen lösemittelhaltigen Pigmentpasten lassen sich insbesondere lösemittelhaltige Farben, Lacken und Lasuren herstellen bzw. einfärben.

Mit den erfindungsgemäßen lösemittelhaltigen Pigmentpasten und den erfindungsgemä-ßen Kit-of-part Abtönsystemen sowie den hieraus zugänglichen abgetönten Anstrichsystemen sind Anstriche auf jedweden Oberflächen, insbesondere auf metallischen Substrats, wie auch Bodenbeschichtungen zugänglich.

Es hat sich überraschend gezeigt, dass mit den erfindungsgemäßen lösemittelhaltigen Pigmentpasten gewährleistet werden kann, dass der Flammpunkt dieser Pigmentpasten stets größer oder gleich 45 °C, bevorzugt größer oder gleich 50 °C und besonders bevorzugt größer oder gleich 52 °C, ist, jeweils bestimmt gemäß DIN EN ISO 1523:2002-08.

Mit der vorliegenden Erfindung geht die überraschende Erkenntnis daher, dass bei Verwendung der Komponenten der erfindungsgemäßen Pigmentpasten selbst derartige Pigmentpasten zugänglich sind mit einem Flammpunkt größer oder gleich 52 °C, die sich zudem durch sehr geringe VOC-Gehalte auszeichnen. Darüber hinaus hat sich überraschend herausgestellt, dass dieses mit Netz- und/oder Dispergiermitteln gelingt, die keine GHS-Kennzeichnung besitzen ("Global Harmonisiertes System für die Einstufung und Kennzeichnung von gefährlichen Chemikalien (GHS)" der Vereinten Nationen, welches mit der CLP-Verordnung (EG) Nr. 1272/2008 am 20. Januar 2009 in der Europäischen Union umgesetzt wurde. Diese CLP-Verordnung ersetzt ab dem 1. Juni 2015 die bisherige europäische Stoffrichtlinie 67/548/EWG sowie die Zubereitungsrichtlinie 1999/45/EG vollständig). Mit anderen Worten, es können mit den erfindungsgemäßen Pigmentpasten Netz- und/oder Dispergiermittel eingesetzt werden, die weder als entzündlich, noch als brandfördernd, noch als ätzend oder reizend und auch nicht als gesundheitsschädlich oder umweltgefährlich zu klassifizieren sind. Gleichwohl gelangt man mit den erfindungsgemäßen lösemittelhaltigen Pigmentpasten sowie den erfindungsgemäßen Kit-of-parts Abtönsystemen zu Produkten, die am *Point of Sale* oder am *Point of Use* die Gefährdung der Nutzer sehr stark minimieren helfen. Auch gelingt mit den erfindungsgemäßen der besonders gefahrlose Zugang zu korrosionsschützenden Anstrichen. Es hat sich überraschend gezeigt, dass sich mit den erfindungsgemäßen Pigmentpasten, insbesondere auch mit solchen, die einen Flammpunkt größer oder gleich 45 °C, bevorzugt größer oder gleich 50 °C und besonders bevorzugt größer oder gleich 52 °C, aufweisen (bestimmt gemäß DIN EN ISO 1523:2002-08) sogar Beschichtungsmassen abtönen lassen, die zu Beschichtungen führen, die die Kategorie C5-I Mittel (Korrosionsschutzdauer für 5 bis 15 Jahre bei einer Schichtdicke im Bereich von 240 bis 280 µm) und vorzugsweise auch die Kategorie C5-I lang (Korrosionsschutzdauer über 15 Jahre bei einer Schichtdicke im Bereich von 320 µm) der DIN EN ISO 12944-2:2018-04 erfüllen. D.h. die erfindungsgemäßen Pigmentpasten liefern Anstrichsysteme, die in industriellen Bereichen mit hoher Feuchtigkeit und aggressiver Atmosphäre über einen sehr langen Zeitraum korrosionsbeständig sind. Insbesondere hat sich auch überraschend gezeigt, dass die mit den erfindungsgemäßen lösemittelhaltigen Pigmentpasten sowie den erfindungsgemäßen Kit-of-parts Abtönsystemen erhältlichen Anstriche trotz der Einhaltung hoher Flammpunkte der erfindungsgemäßen Pigmentpasten ähnlich schnell abtrocknen wie Anstriche erhältlich aus herkömmlichen Pigmentpasten des Stands der Technik. Dies hat beispielsweise den Vorteil, dass mit den erfindungsgemäßen Anstrichen versehene Produkte, beispielsweise Metallformkörper schon nach wenigen Stunden stapelbar sind, ohne dass hierdurch eine Beeinträchtigung der erhaltenen Anstrichflächen eintritt. Schließlich hat sich die universelle Einsetzbarkeit der erfindungsgemäßen Pigmentpasten als besonderer Vorteil erwiesen. Diese können überraschenderweise unverändert für die Einfärbung bzw. das Abtönen von Beschichtungsmassen auf der Basis von z.B. 2K-Epoxidharzsystemen, 2K-PU-Systemen, 1K-Epoxidharzsystemen, 1K-PU-Harzsystemen und Alkydharzsystemen eingesetzt werden.

## Patentansprüche

1. Lösemittelhaltige Pigmentpaste, insbesondere lösemittelhaltige Pigmentpaste, die im Wesentlichen frei von aromatischen Lösemitteln ist, zum Abtönen von Beschichtungsmassen, enthaltend oder bestehend aus
a1) Methoxypropylacetat, n-Propyllactat und/oder 2-Ethylhexylactat, insbesondere Methoxypropylacetat, als Lösemittel,
a2) Propylenglycoldiacetat, Ethylenglycoldiacetat und/oder Butylenglycoldiacetat, insbesondere Propylenglycoldiacetat, als Lösemittel,
b) mindestens einem Pigment und
c) mindestens einem Aldehyd-basierten Harz, insbesondere Harnstoff-Aldehydharz, und/oder mindestens einem Keton-basierten Harz, insbesondere mindestens einem Aldehyd-basierten Harz, und
d) mindestens einem Netz- und/oder Dispergiermittel, insbesondere umfassend einen verzweigtkettigen Polyester d1) und/oder ein Polyesterblockcopolymer d2), vorzugsweise mit einer Molmasse Mw im Bereich von 60.000 bis 100.000 g/mol, und/oder ein polymeres Alkylammoniumsalz d3), und/oder einen Polyphosphorsäureester d4), bevorzugt mit einer Molmasse Mw im Bereich von 100 bis 5.000 g/mol,
wobei diese Pigmentpaste über eine Viskosität im Bereich von 400 bis 4.000 mPas, bestimmt bei einer Schergeschwindigkeit von 120 s⁻¹ und einer Temperatur von 23 °C, verfügt.

2. Lösemittelhaltige Pigmentpaste nach Anspruch 1, ferner umfassend
a3) Essigsäure-*n*-butylester und/oder 3-Methoxy-n-butylacetat, insbesondere 3-Methoxy-n-butylacetat, als Lösemittel.

3. Lösemittelhaltige Pigmentpaste nach Anspruch 1 oder 2, ferner umfassend
e) mindestens einen Entschäumer und/oder
f) mindestens ein Rheologieadditiv, insbesondere Verdicker, und/oder
g) mindestens einen Füllstoff, bevorzugt mindestens einen calcitischen Füllstoff, besonders bevorzugt Calciumcarbonat, und/oder Bariumsulfat, und/oder
h) mindestens ein Additiv, das nicht Komponente d), e), f) ist.

4. Lösemittelhaltige Pigmentpaste nach einem der vorangehenden Ansprüche,
**dadurch gekennzeichnet, dass**
die Pigmente ausgewählt sind aus der Gruppe bestehend aus Dioxazinviolett P.V.23, Phthalocyaningrün P.G.7, Chromoxidgrün P.G.17, DPP-Rot P.R.254, DPP Orange P.O. 73, Azogelb P.Y. 74, Chinophthalone138, Titandioxid Rutil PW 6, Phthalocyaninblau P.B. 15:3 und P.B.15:6, Aluminium n.l., Eisenoxidrot, Eisenoxidgelb, Pigmentruß P.bl.7, Chinacridonrot P.R.122 und Mischungen hiervon.

5. Lösemittelhaltige Pigmentpaste nach einem der vorangehenden Ansprüche,
**dadurch gekennzeichnet, dass**
deren Flammpunkt größer oder gleich 45 °C, bevorzugt größer oder gleich 50 °C und besonders bevorzugt größer oder gleich 52 °C, bestimmt gemäß DIN EN ISO 1523:2002-08, ist.

6. Lösemittelhaltige Pigmentpaste nach einem der vorangehenden Ansprüche, enthaltend
Methoxypropylacetat als Lösemittel a1), insbesondere als einziges Lösemittel a1), Propylenglykoldiacetat als Lösemittel a2), insbesondere als einziges Lösemittel a2), und 3-Methoxy-n-butylacetat als Lösemittel a3), insbesondere als einziges Lösemittel a3), sowie insbesondere den mindestens einen Aldehyd-basierten Harz, insbesondere Harnstoff-Aldehydharz, c).

7. Lösemittelhaltige Pigmentpaste nach einem der vorangehenden Ansprüche, enthaltend
1,0 bis 30,0 Gew.-%, bevorzugt 2,0 bis 26 Gew.-% und besonders bevorzugt 5 bis 12 Gew.-% an Komponente a1),
0,1 bis 15,0 Gew.-%, bevorzugt 2,0 bis 12 Gew.-% und besonders bevorzugt 3 bis 10 Gew.-% an Komponente a2),
o bis 15,0 Gew.-%, bevorzugt 1,0 bis 10,0 Gew.-% und besonders bevorzugt 2,0 bis 8,0 Gew.-% an Komponente a3),
0,1 bis 65,0 Gew.-%, bevorzugt 1,0 bis 20 Gew.-% und besonders bevorzugt 2,0 bis 15,0 Gew.-% an Komponente b),
5,0 bis 45,0 Gew.-%, bevorzugt 8,0 bis 40,0 Gew.-% und besonders bevorzugt 10,0 bis 25,0 Gew.-% an Komponente c),
0,2 bis 14,0 Gew.-%, bevorzugt 0,5 bis 10,0 Gew.-% und besonders bevorzugt 0,8 bis 8,0 Gew.-% an Komponente d),
jeweils bezogen auf das Gesamtgewicht der Pigmentpaste, wobei die die Pigmentpaste bildenden Komponenten sich stets zu 100,00 Gew.-% aufaddieren.

8. Lösemittelhaltige Pigmentpaste nach einem der vorangehenden Ansprüche, enthaltend
o bis 5,0 Gew.-%, bevorzugt 0,5 bis 4,0 Gew.-% und besonders bevorzugt 0,6 bis 3,0 Gew.-% an Komponente d1) und/oder
o bis 4,0 Gew.-%, bevorzugt 0,05 bis 3,0 Gew.-% und besonders bevorzugt 0,1 bis 2,5 Gew.-% an Komponente d2) und/oder
o bis 3,0 Gew.-%, bevorzugt 0,05 bis 2,0 Gew.-% und besonders bevorzugt 0,1 bis 1,5 Gew.-% an Komponente d3) und/oder
o bis 3 Gew.-%, bevorzugt 0,05 bis 2 Gew.-% und besonders bevorzugt 0,1 bis 1,5 Gew.-% an Komponente d4),
wobei mindestens d1) oder d2) oder d3) oder d4) in einer Menge größer 0 Gew.-% in der Pigmentpaste vorliegt.

9. Lösemittelhaltige Pigmentpaste nach einem der vorangehenden Ansprüche,
**dadurch gekennzeichnet, dass**
diese über eine Viskosität im Bereich von 400 bis 3.500 mPas, bestimmt bei einer Schergeschwindigkeit von 120 s⁻¹ und einer Temperatur von 23 °C, verfügt.

10. Lösemittelhaltige Pigmentpaste nach einem der vorangehenden Ansprüche,
**dadurch gekennzeichnet, dass**
diese mindestens einen verzweigtkettigen Polyester d1) sowie gegebenenfalls ein polymeres Alkylammoniumsalz d3) und/oder einen Polyphosphorsäureester d4), bevorzugt mit einer Molmasse Mw im Bereich von 100 bis 5.000 g/mol, und insbesondere kein Polyesterblockcopolymer d2), und mindestens ein anorganisches Pigment, vorzugsweise mindestens ein anorganisches Pigment und keine organischen Pigmente, enthält oder dass
diese mindestens ein Polyesterblockcopolymer d2), vorzugsweise mit einer Molmasse Mw im Bereich von 60.000 bis 100.000 g/mol, sowie gegebenenfalls ein polymeres Alkylammoniumsalz d3) und/oder einen Polyphosphorsäureester d4), bevorzugt mit einer Molmasse Mw im Bereich von 100 bis 5.000 g/mol, und insbesondere keinen verzweigtkettigen Polyester d1), und mindestens ein organisches Pigment, vorzugsweise mindestens ein organisches Pigment und keine anorganischen Pigmente, enthält.

11. Kit-of-parts Beschichtungssystem, enthaltend oder gebildet aus
A) mindestens einer lösemittelhaltigen Pigmentpaste nach einem der vorangehenden Ansprüche und
B) mindestens einer Beschichtungsmasse.

12. Kit-of-parts Beschichtungssystem nach Anspruch 11, **dadurch gekennzeichnet, dass** die Beschichtungsmasse eine lösemittelhaltige Lasur, einen Lösemittellack, eine lösemittelhaltige Farbe, eine lösemittelhaltige Bodenbeschichtung, lösemittelhaltige Korrosionsschutzbeschichtungsmasse, insbesondere eingerichtet und ausgelegt, um Beschichtungen zu liefern, die die Kategorie C5-I Mittel und vorzugsweise die Kategorie C5-I lang gemäß DIN EN ISO 12944-2:2018-04 erfüllen, oder die jeweilige Grundrezeptur hierfür darstellt.

13. Kit-of-parts Beschichtungssystem nach Anspruch 11 oder 12, **dadurch gekennzeichnet, dass**
die Beschichtungsmasse auf einem 2K-Epoxidharzsystem, einem 2K-PU-Harzsystem, einem 1K-Epoxidharzsystem, einem 1K-PU-Harzsystem oder einem Alkydharzsystem basiert.

14. Kit-of-parts Beschichtungssystem nach einem der Ansprüche 11 bis 13, **dadurch gekennzeichnet, dass**
die Beschichtungsmasse mindestens ein Korrosionsschutzmittel enthält, insbesondere ausgewählt aus der Gruppe bestehend aus Calciumorthophosphat, Calcium-Magnesium-Orthophosphat, Calcium-Aluminium-Polyphosphatsilicathydrat, Zink-Aluminium-Orthophosphat, basisches Zink-Orthophosphathydrat, Zink-Aluminium-Polyphosphathydrat, Zink-Aluminium-Orthophosphathydrat, Zink-Aluminium-Molybdän-Orthophosphathydrat, basisches Zinkorthophosphathydrat, Zink-Aluminium-Polyphosphathydrat, Strontium-Aluminium-Polyphosphathydrat, basisches Zink-Molybdän-Orthophosphathydrat, Zink-Calcium-Strontium-Aluminium-Orthophosphatsilikathydrat, Zinkoxid und deren Mischungen.

15. Verwendung der lösemittelhaltigen Pigmentpaste nach einem der Ansprüche 1 bis 10 in Abtönmaschinen, insbesondere Point-of-Sale-Abtönmaschinen.

16. Verwendung der lösemittelhaltigen Pigmentpaste nach einem der Ansprüche 1 bis 10 zum Einfärben von 2K-Epoxidharzsystemen, 2K-PU-Harzsystemen, 1K-Epoxidharzsystemen, 1K-PU-Harzsystemen und/oder, insbesondere und, Alkydharzsystemen.

17. Verwendung der lösemittelhaltigen Pigmentpaste nach einem der Ansprüche 1 bis 10 für die Herstellung abgetönter Anstrichsysteme, bevorzugt von lösemittelhaltigen Lasuren, lösemittelhaltigen Lacken, lösemittelhaltigen Farben und/oder lösemittelhaltigen Bodenbeschichtungen und besonders bevorzugt von lösemittelhaltigen Korrosionsschutzbeschichtungsmassen, insbesondere eingerichtet und ausgelegt, um Beschichtungen zu liefern, die die Kategorie C5-I Mittel und vorzugsweise die Kategorie C5-I lang gemäß DIN EN ISO 12944-2:2018-04 erfüllen.

18. Verwendung der lösemittelhaltigen Pigmentpaste nach einem der Ansprüche 1 bis 10 für die Sicherstellung eines Flammpunkts größer oder gleich 45 °C, bevorzugt größer oder gleich 50 °C und besonders bevorzugt größer oder gleich 52 °C, bestimmt gemäß DIN EN ISO 1523:2002-08.

19. Abgetöntes Anstrichsystem, erhältlich aus dem Kit-of-parts Beschichtungssystem nach einem der Ansprüche 11 bis 14 durch Vermischen der lösemittelhaltigen Pigmentpaste A) mit der Beschichtungsmasse B) oder einem Bestandteil hiervon, insbesondere einer lösemittelhaltigen Korrosionsschutzbeschichtung, insbesondere eingerichtet und ausgelegt, um Beschichtungen zu liefern, die die Kategorie C5-I Mittel und vorzugsweise die Kategorie C5-I lang gemäß DIN EN ISO 12944-2:2018-04 erfüllen.

20. Anstrich, erhältlich durch Auftragen des abgetönten Anstrichsystems nach Anspruch 19 auf eine Substratoberfläche, insbesondere auf einer metallischen Substratoberfläche.

## Claims

1. Solvent-containing pigment paste, in particular solvent-containing pigment paste which is substantially free of aromatic solvents, for tinting coating compositions, containing or consisting of
a1) methoxypropyl acetate, n-propyl lactate and/or 2-ethylhexyl lactate, in particular methoxypropyl acetate, as solvent,
a2) propylene glycol diacetate, ethylene glycol diacetate and/or butylene glycol diacetate, in particular propylene glycol diacetate, as solvent,
b) at least one pigment and
c) at least one aldehyde-based resin, in particular urea-aldehyde resin, and/or at least one ketone-based resin, in particular at least one aldehyde-based resin, and
d) at least one wetting and/or dispersing agent, in particular comprising a branched-chain polyester d1) and/or a polyester block copolymer d2), preferably having a molar mass Mw in the range from 60,000 to 100,000 g/mol, and/or a polymeric alkylammonium salt d3), and/or a polyphosphoric acid ester d4), preferably having a molar mass Mw in the range from 100 to 5,000 g/mol,
wherein this pigment paste has a viscosity in the range from 400 to 4,000 mPas, determined at a shear rate of 120 s⁻¹ and a temperature of 23°C.

2. Solvent-containing pigment paste according to Claim 1, further comprising
a3) acetic acid n-butylester and/or 3-methoxy-n-butyl acetate, in particular 3-methoxy-n-butyl acetate, as solvent.

3. Solvent-containing pigment paste according to Claim 1 or 2, further comprising
e) at least one defoamer and/or
f) at least one rheology additive, in particular thickener, and/or
g) at least one filler, preferably at least one calcitic filler, particularly preferably calcium carbonate, and/or barium sulfate, and/or
h) at least one additive which is not component d), e), f).

4. Solvent-containing pigment paste according to any of the preceding claims, **characterized in that**
the pigments are selected from the group consisting of dioxazine violet P.V.23, phthalocyanine green P.G.7, chromium oxide green P.G.17, DPP red P.R.254, DPP orange P.O. 73, azo yellow P.Y. 74, quinophthalone138, titanium dioxide rutile PW 6, phthalocyanine blue P.B. 15:3 and P.B.15:6, aluminum n.I., iron oxide red, iron oxide yellow, pigment black P.bl.7, quinacridone red P.R.122 and mixtures thereof.

5. Solvent-containing pigment paste according to any of the preceding claims, **characterized in that**
the flash point thereof is greater than or equal to 45°C, preferably greater than or equal to 50 °C and particularly preferably greater than or equal to 52°C, determined according to DIN EN ISO 1523:2002-08.

6. Solvent-containing pigment paste according to any of the preceding claims, containing
methoxypropyl acetate as solvent a1), in particular as sole solvent a1), propylene glycol diacetate as solvent a2), in particular as sole solvent a2), and 3-methoxy-n-butyl acetate as solvent a3), in particular as sole solvent a3), as well as in particular the at least one aldehyde-based resin, in particular urea-aldehyde resin, c).

7. Solvent-containing pigment paste according to any of the preceding claims, containing
1.0 to 30.0 wt.-%, preferably 2.0 to 26 wt.-% and particularly preferably 5 to 12 wt.-% of component a1),
0.1 to 15.0 wt.-%, preferably 2.0 to 12 wt.-% and particularly preferably 3 to 10 wt.-% of component a2),
0 to 15.0 wt.-%, preferably 1.0 to 10.0 wt.-% and particularly preferably 2.0 to 8.0 wt.-% of component a3),
0.1 to 65.0 wt.-%, preferably 1.0 to 20 wt.-% and particularly preferably 2.0 to 15.0 wt.-% of component b),
5.0 to 45.0 wt.-%, preferably 8.0 to 40.0 wt.-% and particularly preferably 10.0 to 25.0 wt.-% of component c),
0.2 to 14.0 wt.-%, preferably 0.5 to 10.0 wt.-% and particularly preferably 0.8 to 8.0 wt.-% of component d),
based in each case on the total weight of the pigment paste, wherein the components forming the pigment paste always add up to 100.00 wt.-%.

8. Solvent-containing pigment paste according to any of the preceding claims, containing
0 to 5.0 wt.-%, preferably 0.5 to 4.0 wt.-% and particularly preferably 0.6 to 3.0 wt.-% of component d1) and/or
0 to 4.0 wt.-%, preferably 0.05 to 3.0 wt.-% and particularly preferably 0.1 to 2.5 wt.-% of component d2) and/or
0 to 3.0 wt.-%, preferably 0.05 to 2.0 wt.-% and particularly preferably 0.1 to 1.5 wt.-% of component d3) and/or
0 to 3 wt.-%, preferably 0.05 to 2 wt.-% and particularly preferably 0.1 to 1.5 wt.-% of component d4),
wherein at least d1) or d2) or d3) or d4) is present in an amount greater than 0 wt.-% in the pigment paste.

9. Solvent-containing pigment paste according to any of the preceding claims, **characterized in that**
this pigment paste has a viscosity in the range from 400 to 3,500 mPas, determined at a shear rate of 120 s⁻¹ and a temperature of 23°C.

10. Solvent-containing pigment paste according to any of the preceding claims, **characterized in that**
this pigment paste contains at least one branched-chain polyester d1) as well as optionally a polymeric alkylammonium salt d3) and/or a polyphosphoric acid ester d4), preferably having a molar mass Mw in the range from 100 to 5,000 g/mol, and in particular no polyester block copolymer d2), and at least one inorganic pigment, preferably at least one inorganic pigment and no organic pigments, or **in that** this pigment paste contains at least one polyester block copolymer d2), preferably having a molar mass Mw in the range from 60,000 to 100,000 g/mol, as well as optionally a polymeric alkylammonium salt d3) and/or a polyphosphoric acid ester d4), preferably having a molar mass Mw in the range from 100 to 5,000 g/mol, and in particular no branched-chain polyester d1), and at least one organic pigment, preferably at least one organic pigment and no inorganic pigments.

11. Kit-of-parts coating system, containing or formed from
A) at least one solvent-containing pigment paste according to any of the preceding claims and
B) at least one coating composition.

12. Kit-of-parts coating system according to Claim 11, **characterized in that** the coating composition is a solvent-containing glaze, a solvent containing varnish, a solvent-containing paint, a solvent-containing floor coating, a solvent-containing anti-corrosion coating composition, in particular arranged and adapted to provide coatings which satisfy the category C5-I average and preferably the category C5-I long according to DIN EN ISO 12944-2:2018-04, or the respective basic formulation therefor.

13. Kit-of-parts coating system according to Claim 11 or 12, **characterized in that** the coating composition is based on a 2K epoxy resin system, a 2K PU resin system, a 1K epoxy resin system, a 1K PU resin system or an alkyd resin system.

14. Kit-of-parts coating system according to any of Claims 11 to 13, **characterized in that** the coating composition contains at least one corrosion inhibitor, in particular selected from the group consisting of calcium orthophosphate, calcium magnesium orthophosphate, calcium aluminium polyphosphate silicate hydrate, zinc aluminium orthophosphate, basic zinc orthophosphate hydrate, zinc aluminium polyphosphate hydrate, zinc aluminium orthophosphate hydrate, zinc aluminium molybdenum orthophosphate hydrate, basic zinc orthophosphate hydrate, zinc aluminium polyphosphate hydrate, strontium aluminium polyphosphate hydrate, basic zinc molybdenum orthophosphate hydrate, zinc calcium strontium aluminium orthophosphate silicate hydrate, zinc oxide and mixtures thereof.

15. Use of the solvent-containing pigment paste according to any of Claims 1 to 10 in tinting machines, in particular point-of-sale tinting machines.

16. Use of the solvent-containing pigment paste according to any of Claims 1 to 10 for colouring 2K epoxy resin systems, 2K PU resin systems, 1K epoxy resin systems, 1K PU resin systems and/or, in particular and, alkyd resin systems.

17. Use of the solvent-containing pigment paste according to any of Claims 1 to 10 for the production of tinted paint systems, preferably of solvent-containing glazes, solvent-containing varnishes, solvent-containing paints and/or solvent-containing floor coatings and particularly preferably of solvent-containing anti-corrosion coating compositions, in particular arranged and adapted to provide coatings which satisfy the category C5-I average and preferably the category C5-I long according to DIN EN ISO 12944-2:2018-04.

18. Use of the solvent-containing pigment paste according to any of Claims 1 to 10 for ensuring a flash point greater than or equal to 45°C, preferably greater than or equal to 50°C and particularly preferably greater than or equal to 52°C, determined according to DIN EN ISO 1523:2002-08.

19. Tinted paint system obtainable from the kit-of-parts coating system according to any of Claims 11 to 14 by mixing the solvent-containing pigment paste A) with the coating composition B) or a constituent thereof, in particular a solvent-containing anti-corrosion coating, in particular arranged and adapted to provide coatings which satisfy the category C5-I average and preferably the category C5-I long according to DIN EN ISO 12944-2:2018-04.

20. Paint obtainable by applying the tinted paint system according to Claim 19 to a substrate surface, in particular to a metallic substrate surface.

## Revendications

1. Pâte pigmentaire contenant des solvants, en particulier pâte de pigment contenant des solvants, qui est essentiellement exempte de solvants aromatiques, pour la teinture de masses de revêtement, contenant ou constituée par:
a1) de l'acétate de méthoxypropyle, du lactate de n-propyle et/ou du lactate de 2-éthylhexyle, en particulier de l'acétate de méthoxypropyle, en tant que solvants,
a2) du diacétate de propylène glycol, du diacétate d'éthylène glycol et/ ou du diacétate de butylène glycol, en particulier du diacétate de propylène glycol, en tant que solvants,
b) au moins un pigment et
c) au moins une résine à base d'aldéhyde, en particulier une résine d'urée-aldéhyde, et/ou au moins une résine à base de cétone, en particulier au moins une résine à base d'aldéhyde, et
d) au moins un agent mouillant et/ou dispersant, en particulier comprenant un polyester à chaîne ramifiée d1) et/ ou un copolymère bloc de polyester d2), de préférence ayant une masse moléculaire Mw dans la plage de 60 000 à 100 000 g/mol, et/ou un sel d'alkylammonium polymère d3), et/ou un ester d'acide polyphosphorique d4), de préférence ayant une masse moléculaire Mw dans la plage de 100 à 5 000 g/mol,
cette pâte de pigment disposant d'une viscosité dans la plage de 400 à 4 000 mPas, déterminée à une vitesse de cisaillement de 120 s-1 et à une température de 23 °C.

2. Pâte de pigment contenant des solvants selon la revendication 1, comprenant en outre
a3) de l'acétate de *n*-butyle et/ou de l'acétate de 3-méthoxy-n-butyle, en particulier de l'acétate de 3-méthoxy-n-butyle, en tant que solvants.

3. Pâte de pigment contenant des solvants selon la revendication 1 ou 2, comprenant en outre
e) au moins un antimousse et/ou
f) au moins un additif de rhéologie, en particulier un épaississant, et/ou
g) au moins une charge, de préférence au moins une charge calcitique, de manière particulièrement préférée du carbonate de calcium et/ou du sulfate de baryum, et/ou
h) au moins un additif qui n'est pas le composant d), e), f).

4. Pâte de pigment contenant des solvants selon l'une quelconque des revendications précédentes, **caractérisée en ce que**
les pigments sont choisis dans le groupe constitué par le violet de dioxazine P.V.23, le vert de phtalocyanine P.G.7, le vert d'oxyde de chrome P.G.17, le rouge de DPP P.R.254, l'orange de DPP P.O. 73, le jaune azo P.Y. 74, la quinophthalone138, le dioxyde de titane Rutile PW 6, le bleu de phtalocyanine P.B. 15:3 et P.B. 15:6, l'aluminium n.l., le rouge d'oxyde de fer, le jaune d'oxyde de fer, le noir de pigment P.bl.7, le rouge de quinacridone P.R.122 et des mélanges de ceux-ci.

5. Pâte de pigment contenant des solvants selon l'une quelconque des revendications précédentes, **caractérisée en ce que**
son point d'éclair est supérieur ou égal à 45 °C, de préférence supérieur ou égal à 50 °C et de manière particulièrement préférée supérieur ou égal à 52 °C, déterminé selon DIN EN ISO 1523:2002-08.

6. Pâte de pigment contenant des solvants selon l'une quelconque des revendications précédentes, contenant:
de l'acétate de méthoxypropyle en tant que solvant a1), en particulier en tant que solvant unique a1), du diacétate de propylène glycol en tant que solvant a2), en particulier en tant que solvant unique a2), et de l'acétate de 3-méthoxy-n-butyle en tant que solvant a3), en particulier en tant que solvant unique a3), ainsi qu'en particulier l'au moins une résine à base d'aldéhyde, en particulier une résine d'urée-aldéhyde, c).

7. Pâte de pigment contenant des solvants selon l'une quelconque des revendications précédentes, contenant:
de 1,0 à 30,0 % en poids, de préférence de 2,0 à 26 % en poids et de manière particulièrement préférée de 5 à 12 % en poids de composant a1),
de 0,1 à 15,0 % en poids, de préférence de 2,0 à 12 % en poids et de manière particulièrement préférée de 3 à 10 % en poids de composant a2),
de 0 à 15,0 % en poids, de préférence de 1,0 à 10,0 % en poids et de manière particulièrement préférée de 2,0 à 8,0 % en poids de composant a3),
de 0,1 à 65,0 % en poids, de préférence de 1,0 à 20 % en poids et de manière particulièrement préférée de 2,0 à 15,0 % en poids de composant b),
de 5,0 à 45,0 % en poids, de préférence de 8,0 à 40,0 % en poids et de manière particulièrement préférée de 10,0 à 25,0 % en poids de composant c),
de 0,2 à 14,0 % en poids, de préférence de 0,5 à 10,0 % en poids et de manière particulièrement préférée de 0,8 à 8,0 % en poids de composant d),
à chaque fois par rapport au poids total de la pâte de pigment, la somme des composants formant la pâte de pigment étant toujours de 100,00 % en poids.

8. Pâte de pigment contenant des solvants selon l'une quelconque des revendications précédentes, contenant:
de 0 à 5,0 % en poids, de préférence de 0,5 à 4,0 % en poids et de manière particulièrement préférée de 0,6 à 3,0 % en poids de composant d1) et/ou
de 0 à 4,0 % en poids, de préférence de 0,05 à 3,0 % en poids et de manière particulièrement préférée de 0,1 à 2,5 % en poids de composant d2) et/ou
de 0 à 3,0 % en poids, de préférence de 0,05 à 2,0 % en poids et de manière particulièrement préférée de 0,1 à 1,5 % en poids de composant d3) et/ou
de 0 à 3 % en poids, de préférence de 0,05 à 2 % en poids et de manière particulièrement préférée de 0,1 à 1,5 % en poids de composant d4),
où au moins d1) ou d2) ou d3) ou d4) étant présent en une quantité supérieure à 0 % en poids dans la pâte de pigment.

9. Pâte de pigment contenant des solvants selon l'une quelconque des revendications précédentes, **caractérisée en ce que**
celle-ci dispose d'une viscosité dans la plage de 400 à 3500 mPas, déterminée à une vitesse de cisaillement de 120 s⁻¹ et à une température de 23 °C.

10. Pâte de pigment contenant des solvants selon l'une quelconque des revendications précédentes, **caractérisée en ce que**
celle-ci contient au moins un polyester à chaîne ramifiée d1) ainsi que le cas échéant un sel d'alkylammonium polymère d3) et/ou un ester d'acide polyphosphorique d4), de préférence ayant une masse moléculaire Mw dans la plage de 100 à 5 000 g/mol, et en particulier pas de copolymère bloc de polyester d2), et au moins un pigment inorganique, de préférence au moins un pigment inorganique et pas de pigments organiques, ou **en ce que**
celle-ci contient au moins un copolymère bloc de polyester d2), de préférence ayant une masse moléculaire Mw dans la plage de 60 000 à 100 000 g/mol, ainsi que le cas échéant un sel d'alkylammonium polymère d3) et/ou un ester d'acide polyphosphorique d4), de préférence ayant une masse moléculaire Mw dans la plage de 100 à 5 000 g/mol, et en particulier pas de polyester à chaîne ramifiée d1), et au moins un pigment organique, de préférence au moins un pigment organique et pas de pigments inorganiques.

11. Système de revêtement en kit de pièces, contenant ou formé par:
A) au moins une pâte de pigment contenant des solvants selon l'une quelconque des revendications précédentes et
B) au moins une masse de revêtement.

12. Système de revêtement en kit de pièces selon la revendication 11, **caractérisé en ce que**
la masse de revêtement est un glacis contenant des solvants, un vernis à solvants, une peinture contenant des solvants, un revêtement de sol contenant des solvants, une masse de revêtement anticorrosion contenant des solvants, en particulier réalisé et conçu pour fournir des revêtements qui satisfont à la catégorie C5-I moyenne et de préférence à la catégorie C5-I longue selon DIN EN ISO 12944-2:2018-04, ou la recette de base respective pour ceux-ci.

13. Système de revêtement en kit de pièces selon la revendication 11 ou 12, **caractérisé en ce que**
la masse de revêtement est à base d'un système de résine époxy 2K, d'un système de résine PU 2K, d'un système de résine époxy 1K, d'un système de résine PU 1K ou d'un système de résine alkyde.

14. Système de revêtement en kit de pièces selon l'une quelconque des revendications 11 à 13, **caractérisé en ce que**
la masse de revêtement contient au moins un agent anticorrosion, en particulier choisi dans le groupe constitué par l'orthophosphate de calcium, l'orthophosphate de calcium-magnésium, l'hydrate de silicate de polyphosphate de calcium-aluminium, l'orthophosphate de zinc-aluminium, l'hydrate d'orthophosphate de zinc basique, l'hydrate de polyphosphate de zinc-aluminium, l'hydrate d'orthophosphate de zinc-aluminium, l'hydrate d'orthophosphate de zinc-aluminium-molybdène, l'hydrate d'orthophosphate de zinc basique, l'hydrate de polyphosphate de zinc-aluminium, l'hydrate de polyphosphate de strontium-aluminium, l'hydrate d'orthophosphate de zinc-molybdène basique, l'hydrate d'orthophosphate de zinc-calcium-strontium-aluminium, l'oxyde de zinc et leurs mélanges.

15. Utilisation de la pâte de pigment contenant des solvants selon l'une quelconque des revendications 1 à 10 dans des machines de teinture, en particulier des machines de teinture de point de vente.

16. Utilisation de la pâte de pigment contenant des solvants selon l'une quelconque des revendications 1 à 10 pour la teinture de systèmes de résine époxy 2K, de systèmes de résine PU 2K, de systèmes de résine époxy 1K, de systèmes de résine PU 1K et/ ou, en particulier et, de systèmes de résine alkyde.

17. Utilisation de la pâte de pigment contenant des solvants selon l'une quelconque des revendications 1 à 10 pour la fabrication de systèmes de peinture teintés, de préférence de glacis contenant des solvants, de vernis contenant des solvants, de peintures contenant des solvants et/ou de revêtements de sol contenant des solvants et de manière particulièrement préférée de masses de revêtement anticorrosion contenant des solvants, en particulier réalisé et conçu pour fournir des revêtements qui satisfont à la catégorie C5-I moyenne et de préférence à la catégorie C5-I longue selon DIN EN ISO 12944-2:2018-04.

18. Utilisation de la pâte de pigment contenant des solvants selon l'une quelconque des revendications 1 à 10 pour la garantie d'un point d'éclair supérieur ou égal à 45 °C, de préférence supérieur ou égal à 50 °C et de manière particulièrement préférée supérieur ou égal à 52 °C, déterminé selon DIN EN ISO 1523:2002-08.

19. Système de peinture teinté, pouvant être obtenu à partir du système de revêtement en kit de pièces selon l'une quelconque des revendications 11 à 14 par mélange de la pâte de pigment contenant des solvants A) avec la masse de revêtement B) ou un composant de celle-ci, en particulier un revêtement anticorrosion contenant des solvants, en particulier réalisé et conçu pour fournir des revêtements qui satisfont à la catégorie C5-I moyenne et de préférence à la catégorie C5-I longue selon DIN EN ISO 12944-2:2018-04.

20. Peinture, pouvant être obtenue par application du système de peinture teinté selon la revendication 19 sur une surface de substrat, en particulier sur une surface de substrat métallique.
